# EUROPÄISCHE PATENTSCHRIFT

(11) **EP 1 985 880 B1**
(45) Veröffentlichungstag und Bekanntmachung des Hinweises auf die Patenterteilung: **05.12.2012**
(21) Anmeldenummer: 08154427.2
(22) Anmeldetag: 11.04.2008
(51) Int. Cl.: F16D 23/14

(54) **Kupplungsausrücklagereinrichtung**
Coupling disengage device
Dispositif de palier de débrayage d'un accouplement

(30) Priorität: 28.04.2007 DE 102007020109
(43) Veröffentlichungstag der Anmeldung: 29.10.2008
(73) Patentinhaber: Schaeffler Technologies AG & Co. KG, 91074 Herzogenaurach (DE)
(72) Erfinder: Winkelmann, Ludwig, 91056, Erlangen (DE)

(56) Entgegenhaltungen:
- EP-A1- 1 373 749
- EP-A2- 1 647 731
- DE-A1- 19 949 909

## Beschreibung

### Gebiet der Erfindung

Die Erfindung richtet sich auf eine Kupplungsausrücklagereinrichtung die als solche dazu dient, zwischen einer umlaufenden Kupplungsstruktur, beispielsweise einer Kupplungsfederplatte und einem Aktuatorsystem, beispielsweise einem Ausrückzylinder eine Axialkraft zu übertragen und hierdurch den Kupplungszustand der Kupplungsstruktur festzulegen.

Typischerweise umfassen derartige Kupplungsausrücklagereinrichtungen ein weitgehend abgedichtetes Wälzlager das einen durch das Aktautorsystem abgestützten ersten Laufring und einen mit der Kupplungsstruktur umlaufenden zweiten Laufring aufweist. Diese Laufringe können so gestaltet sein, dass diese neben den zur Bereitstellung der Wälzkörperlaufflächen vorgesehenen Ringabschnitten auch weitere Bord-, Kragen-, oder Ringabschnitte umfassen die der Aufhängung des Wälzlagers, sowie der weiteren Übertragung der über die Wälzkörper geführten Betriebskräfte dienen.

Aus DE 199 124 32 A1 ist eine Kupplungsausrücklagereinrichtung bekannt, die eine auf einer Führungsbuchseneinrichtung angeordnete und gemeinsam mit dieser Führungsbuchseneinrichtung axial verschiebbare Wälzlagereinrichtung umfasst. Die Fixierung der Wälzlagereinrichtung an der Führungsbuchseneinrichtung ist durch ein als Ringbuchse ausgeführtes Sicherungselement bewerkstelligt, das einen Abschnitt aufweist, der auf der Führungsbuchseneinrichtung sitzt und an dieser über Rastklauen verankert ist. An der Ringbuchse ist weiterhin eine Ringschulter ausgebildet, auf welcher ein Tragringabschnitt der Wälzlagereinrichtung angeordnet ist. Dieser Tragringabschnitt ist durch eine Tellerfeder gegen eine Radialfläche der Ringschulter gespannt.

Aus US PS 4,565,272 ist ebenfalls eine Kupplungsausrücklagereinrichtung bekannt, die eine mit einem Halteflansch versehene Wälzlagereinrichtung umfasst, die gemeinsam mit einer als Schiebehülse ausgebildeten Führungsbuchseneinrichtung axial verschiebbar ist. Die Sicherung der Wälzlagereinrichtung auf der Führungsbuchseneinrichtung erfolgt unter Verwendung eines Ringelementes, das in einer auf der Führungsbuchseneinrichtung ausgebildeten Nut sitzt.

Aus DE 10 2004 062 586 A1 ist eine Kupplungsausrücklagereinrichtung bekannt, bei welcher ein Halteflanschabschnitt einer Wälzlagereinrichtung unter Verwendung einer Sicherungsringstruktur auf einer Führungsbuchseneinrichtung fixiert ist. Die Sicherungsringstruktur umfasst einen nach außen offenen Rinnenabschnitt in welchem der Halteflanschabschnitt der Wälzlagereinrichtung sowie eine diesen gegen eine Anlagefläche drängende Tellerfeder aufgenommen sind. Die Sicherungsringstruktur ist weiterhin mit einem Halterand versehen, der als solcher einen die Führungsbuchseneinrichtung tragenden Aktuatorflansch von außen her umgreift.

Die DE 199 49 909 A1 und EP 1 373 749 A1 zeigen eine Kupplungsausrückerlagereinrichtung, bei der ein Halteflanschabschnitt eine Wälzlagereinrichtung mittels eines Stützboards auf einer Führungsbuchseneinrichtung fixiert ist. Das Stützboard greift dabei an eine Tellerfeder an, die sich an den feststehenden Lagerring des Ausrücklagers abstützt und diesen derart gegen die Führungshülse oder eine an der Führungshülse festgelegte Unterstützungsstruktur presst.

Die vorstehend beschriebene Stützklaue ist insbesondere als Ausklinkung aus einem Ringmantelabschnitt gefertigt. Die Stützklaue ist dabei so ausgeführt, dass diese im Rahmen des Aufschubs der Tellerfeder durch federelastische Verformung unter das Durchmessemiveau der Innenöffnung der Tellerfeder absenkbar ist. Diese Stützklaue ist dabei insbesondere derart gestaltet, dass diese im Rahmen des Aufschubs der Tellerfeder unter federelastischer Verformung zunächst unter das Durchmessemiveau der Innenöffnung der Tellerfeder abtaucht und bei Erreichen der Endstellung der Tellerfeder radial nach außen schnappt und damit die Tellerfeder in axialer Richtung sichert. Die so gebildete Ausnehmung wiederum bildet gemäß einem besonderen Aspekt der vorliegende Erfindung vorzugsweise eine Eingriffsausnehmung in welche eine seitens der Führungsbuchseneinrichtung ausgebildete Mitnehmerstruktur, insbesondere Abschubssicherungs-Rastnase eintaucht kann.

Die erfindungsgemäß gestaltete Sicherungsringstruktur kann insbesondere als Aufsatzbuchse ausgeführt sein, die zumindest abschnittsweise auf der Führungsbuchseneinrichtung sitzt. Eine weitere Ausgestaltung der Erfindung sieht vor, dass die Sicherungsringstruktur mit einer Arretierstruktur versehen ist, zur Sicherung der Sicherungsringstruktur an der Führungsbuchseneinrichtung. Es ist möglich, unmittelbar an der Sicherungsringstruktur Arretiermittel, insbesondere Rastklauen auszubilden, die als solche eine Sicherung der Sicherungsringstruktur an der Führungsbuchseneinrichtung in Abzugsrichtung ermöglichen.

Mit einer weiteren Ausgestaltung der Erfindung ist die Arretierstruktur als Eingriffsausnehmung ausgeführt, in welche eine seitens der Führungsbuchseneinrichtung ausgebildete Mitnehmerstruktur, insbesondere Abschubssicherungs-Rastnase eintauchen kann.

Die Sicherungsringstruktur umfasst wahlweise eine Ringschulter, durch welche die Axialposition der Wälzlagereinrichtung auf der Führungsbuchseneinrichtung festgelegt ist. Diese Ringschulter kann Teil eines Halteflansches bilden. Auf Grundlage dieses Konzeptes wird es möglich, über die Sicherungsringstruktur , die durch diese abgestützte Tellerfedereinrichtung, den entsprechend durch die Tellerfedereinrichtung gegen die Ringschulter gespannten Tragflansch der Wälzlagereinrichtung und die Ringschulter selbst ein in sich geschlossenes Kraftübertragungssystem zu bilden, durch welches eine definierte Anspannung der Wälzlagereinrichtung gegen die Ringschulter in einer kurzen Bauteil-Toleranzkette und damit in einem engen Kraft-Toleranzbereich sichergestellt ist.

Weitere Einzelheiten und Merkmale der Erfindung ergeben sich aus der nachfolgenden Beschreibung in Verbindung mit der Zeichnung. Es zeigt:
- **Figur 1**: eine Axialschnittansicht einer Kupplungsausrücklagereinrichtung gemäß einer ersten Ausführungsform der Erfindung,
- Figur 2: eine Detaildarstellung zur Veranschaulichung weiterer konstruktiver Einzelheiten der Sicherungsringstruktur,
- Figur 3a: eine Axialschnittansicht zur Veranschaulichung einer weiteren Ausführungsform einer Kupplungsausrücklagereinrichtung, die nicht Gegenstand der Erfindung ist,
- Figur 3b: eine Detaildarstellung zur Veranschaulichung der Gestaltung der Rastklauen der Sicherungsringstruktur gemäß dem Ausführungsbeispiel nach Figur 3a,
- Figur 3c: eine Axialschnittansicht zur Veranschaulichung einer Kupplungsausrücklagereinrichtung gemäß einer zweiten Ausführungsform der Erfindung,
- Figur 4: eine Axialschnittansicht zur Veranschaulichung einer dritten Ausführungsform der Erfindung.
- Figur 5: eine Axialschnittansicht zur Veranschaulichung einer vierten Ausführungsform der Erfindung,
- Figur 6: eine Axialschnittansicht zur Veranschaulichung einer fünften Ausführungsform einer erfindungsgemäßen Kupplungsausrücklagereinrichtung,

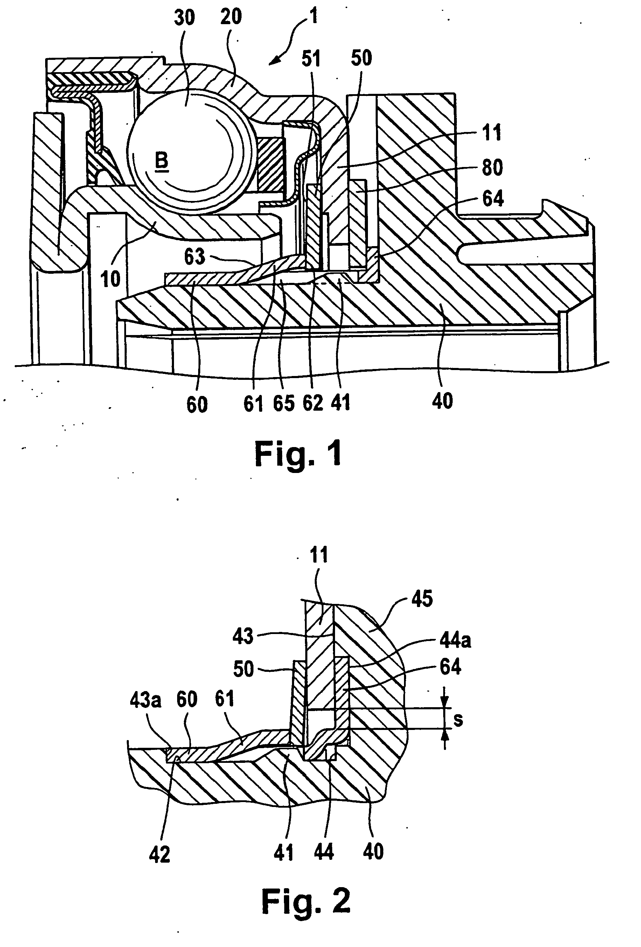

Die in Figur 1 dargestellte Kupplungsausrücklagereinrichtung umfasst eine Wälzlagereinrichtung 1, die einen ersten Wälzlagerlaufring 10 und einen zweiten Wälzlagerlaufring 20 aufweist. Die beiden Wälzlagerlaufringe 10, 20 bilden gemeinsam einen zur Wälzlagerachse konzentrischen Bahnraum B, in welchem Wälzkörper 30 aufgenommen sind.

Bei dem hier gezeigten Ausführungsbeispiel ist die Wälzlagereinrichtung 1 als abgedichtetes Schrägkugellager ausgeführt. Die Kupplungsausrücklagereinrichtung umfasst weiterhin eine Führungsbuchseneinrichtung 40, die gemeinsam mit der Wälzlagereinrichtung 1 in Richtung der Wälzlagerachse axial verschiebbar ist. Weiterhin ist eine Tellerfeder 50 vorgesehen, die der axialen Vorspannung eines integral mit dem zweiten Wälzlagerlaufring 20 ausgeführten Wälzlagerflansches 11 in die hier gezeigte Sitzposition dient. Die Befestigung der Wälzlagereinrichtung 1 an der Führungsbuchseneinrichtung 40 erfolgt über eine Sicherungsringstruktur 60. Die Sicherungsringstruktur ist derart ausgebildet, dass über diese die Wälzlagereinrichtung 1 geringfügig in einer zur Wälzlagerachse X radialen Richtung verlagerbar ist. Der hierbei zugelassene radiale Verlagerungsweg entspricht im wesentlichen dem Maß, das bei ungünstigen Betriebsbedingungen notwendig ist, um eine weitgehend exakte Fluchtung der durch die Wälzlagereinrichtung 1 definierten Lagerachse mit der Umlaufachse des angekoppelten Kupplungssystems zu erreichen.

Die hier dargestellte Kupplungsausrücklagereinrichtung zeichnet sich dadurch aus, dass die Sicherungsringstruktur mehrere in Umfangsrichtung voneinander beabstandete und die Tellerfeder 50 abstützende Stützklauen 61 aufweist. Die Axialposition jeder Stützklaue 61 ist derart festgelegt, dass durch diese Stützklaue 61 die Tellerfeder 50 in einem axial vorgespannten Zustand gesichert ist.

Bei dem hier gezeigten Ausführungsbeispiel ist die Stützklaue 61 als Überschubklaue ausgeführt, die beim Aufschieben der Tellerfeder 50 temporär in radialer Richtung zur Führungsbuchseneinrichtung 40 hin einfedern kann. Die Stützklaue 61 bildet eine Stirnfläche 62, die unmittelbar an der hier erkennbaren Seitenfläche 51 der Tellerfeder 50 ansteht. Die Stützklaue 61 bildet einen Rampenabschnitt 63, der sich von einem innerhalb des Durchmessemiveaus einer Innenöffnung der Tellerfeder 50 liegenden ersten Durchmessemiveau auf ein über diesem ersten Durchmessemiveau liegendes zweites Durchmessemiveau erhebt.

Die hier gezeigte Stützklaue 61 kann insbesondere als Ausklinkung aus dem zur Bildung der Sicherungsringstruktur 60 verwendeten Blechmaterial gefertigt sein.

Die Stützklaue 61 ist derart gestaltet, dass diese im Rahmen des Aufschubs der Tellerfeder 50 durch federelastische Verformung unter das Durchmessemiveau der Innenöffnung der Tellerfeder 50 absenkbar ist.

Bei dem hier gezeigten Ausführungsbeispiel ist die Sicherungsringstruktur 60 als Aufsatzbuchse ausgeführt, die zumindest abschnittsweise - hier vollständig - auf der Führungsbuchseneinrichtung 40 sitzt. Die Sicherungsringstruktur 60 ist gemäß einem besonderen Aspekt der vorliegenden Erfindung durch entgegen der Aufschubrichtung sperrende Rastnasen 41 ebenfalls auf der Führungsbuchseneinrichtung 40 gesichert sein. Es ist weiterhin möglich, die Sicherungsringstruktur 60, wie hier dargestellt, so zu gestalten, dass deren Aufschubstrecke auf die Führungsbuchseneinrichtung relativ groß ist, sodass die auf der Sicherungsringstruktur 60 gesicherte Wälzlagereinrichtung nicht von der Führungsbuchseneinrichtung 40 abgleiten kann.

Bei dem hier gezeigten Ausführungsbeispiel ist die Sicherungsringstruktur 60 weiterhin mit einer Ringschulter 64 versehen, durch welche die Axialposition der Wälzlagereinrichtung 1 an der Sicherungsringsstruktur 60 und damit auf der Führungsbuchseneinrichtung 40 festgelegt ist. Bei dem hier gezeigten Ausführungsbeispiel bildet die Ringschulter 64 eine Anschlagfläche für ein Scheibenelement 80. Der Tragflansch 11 des zweiten Wälzlagerlaufrings 20 ist bei diesem Ausführungsbeispiel zwischen dem Scheibenelement 80 und der Tellerfeder 50 geklemmt. Aufgrund des relativ präzise abstimmbaren Abstandes der Stirnfläche 62 der Stützklaue 61 von der Anschlagwandung der Ringschulter 64 wird eine relativ präzise konstruktive Festlegung der durch die Tellerfeder 50 ausgeübten Klemmkraft möglich.

Die hier dargestellte Sicherungsringstruktur 60 zeichnet sich gemäß einem besonderen Aspekt der Erfindung weiterhin dadurch aus, das diese im Zusammenspiel mit an der Führungsbuchseneinrichtung 40 ausgebildeten Strukturen sowohl in Umfangsrichtung als auch gegen Verschieben entgegen der Aufschubsrichtung gesichert ist.

Hierzu sind an der Führungsbuchseneinrichtung 40 Eingriffsnasen 41 ausgebildet die in Ausnehmungen 65 eingreifen. Diese Ausnehmungen 65 sind in der Umfangswandung der Sicherungsringstruktur 60 ausgebildet. Diese Ausnehmungen können unmittelbar durch das Herausstellen der zur Bildung der Stützklauen 61 vorgesehenen Materialabschnitte aus dem Mantel der Sicherungsringstruktur 60 gefertigt sein. Die radial zur Lagerachse X gemessene Höhe dieser Eingriffsnasen 41 entspricht vorzugsweise wenigstens der Wanddicke des zur Bildung der Sicherungsringstruktur 60 verwendeten Mantelmateriales.

Die Eingriffsnasen 41 befinden sich vorzugsweise in einem von der Tellerfeder 50 und/oder dem Wälzlagerflansch 11 umgriffenen Axialbereich der Führungsbuchseneinrichtung 40. Es ist möglich, diese durch die Eingriffsnasen 41 gebildeten Überstände so zu gestalten, dass durch diese das radiale Bewegungsspiel des Wälzlagerflansches 11 gegenüber der Führungsbuchseneinrichtung 40 festgelegt und ggf. auch das Zurückfedern der Stützklauen 61 verhindert ist.

Die Sichenrngsringstruktur 60 kann insbesondere so gestaltet sein, dass diese während des Aufschubs auf die Führungshülseneinrichtung 40 radial derart weitbar ist, dass diese über die Eingriffsnasen 41 schiebbar ist. Insbesondere ist es möglich, die Sicherungsringstruktur 60 als mit einer Axialtrennstelle versehene Ringstruktur zu fertigen. Diese damit zunächst hinsichtlich ihres Innendurchmessers einfach weitbare Sicherungsringstruktur 60 wird bei diesem Ausführungsbeispiel durch die Tellerfeder 50 und die ggf. auch als Tellerfeder ausgeführte Ringscheibe 80 zusammengehalten und in verbautem Zustand an einer unzulässigen Aufweitung gehindert.

Die Sicherungsringstruktur 60 selbst kann auch so ausgebildet sein, dass diese aufgrund ihrer Eigenspannung relativ stark auf die Führungshülseneinrichtung 40 aufgespannt ist. Weiterhin können im Bereich der Axialtrennstelle miteinander in Eingriff tretende Strukturen, insbesondere Kopf- und Kopfumgriffsstrukturen ("Puzzle-Verbindungsstrukturen") ausgebildet sein die nach Erreichen einer Fügestellung die Sicherungsringstruktur 60 in Umfangsrichtung schließen.

Es ist auch möglich, in die Sicherungsringstruktur 60 Durchbrechungen, insbesondere Mäander-artige Strukturen einzuformen, um der als Sicherungsringstruktur fungierenden Hülse eine hinreichende "Weitbarkeit in Umfangsrichtung" zu verleihen und einen Überschub über die an der Führungsbuchseneinrichtung ausgebildeten Arretierkonturen zu ermöglichen.

In Figur 2 ist eine gegenüber der Ausführungsform nach Figur 1 leicht modifizierte Ausführungsform der Sicherungsringstruktur 60 sowie der zugeordneten Führungsbuchseneinrichtung 40 dargestellt. Bei diesem Ausführungsbeispiel sitzt die Sicherungsringstruktur 60 in einer in der Führungsbuchseneinrichtung 40 ausgebildeten Umfangsnut 42. Der Tragflansch 11 des zweiten Wälzlagerlaufrings 20 ist zwischen der Tellerfeder 50 und der Ringschulter 64 geklemmt. Die Tellerfeder 50 ist wie bei dem Ausführungsbeispiel nach Figur 1 durch die Stützklaue 61 axial gesichert. Unter Wirkung der Tellerfeder 50 ist die Sicherungsringstruktur 60 gegen ein Herausfallen aus der Umfangsnut 42 gesichert. Der die Innenöffnung des Tragflanschs 11 durchsetzende Abschnitt der Sicherungsringstruktur 60 ist bei diesem Ausführungsbeispiel im Querschnitt gekröpft ausgebildet. Durch diese spezielle Kröpfung kann das Radialbewegungsspiel s der Wälzlagereinrichtung 1 auf der Sicherungsringstruktur 60 präzise festgelegt werden.

Im Innenbereich jener Umfangsnut 42 kann wie bei dem Ausführungsbeispiel nach Figur 1 eine Rastnase 41 ausgebildet sein. Die Stützwandungen 43a und 44 der Umfangsnut 42 können Mitnehmergeometrien bilden die mit einer durch die Sicherungsringstruktur 60 bereitgestellten Komplementärgeometrie in Eingriff treten und durch welche eine weitere Verdrehsicherung der Sicherungsringstruktur 60 gegenüber der Führungshülseneinrichtung 40 erreicht wird.

Die Führungsbuchseneinrichtung 40 ist bei diesem Ausführungsbeispiel mit einem nach außen auskragenden Flanschabschnitt 45 versehen. Dieser Flanschabschnitt 45 bildet ebenfalls eine Anlagewandung 43 an welcher der Tragflansch 11 des äußeren Wälzlagertaufrings 20 anstehen kann.

Bei dem hier gezeigten Ausführungsbeispiel ist der dem Tragflansch 11 sowie der Ringschulter 64 zugewandte Seitenbereich des Flanschabschnittes 45 so gestaltet, dass dieser eine primär den Tragflansch 11 abstützende erste Stützwand 43 und eine gegenüber dieser abgesenkte Innenwand 44 bildet. Der Abstand zwischen der Stützwand 43 und der Innenwand 44 ist so gewählt, dass bei Anlage des Tragflansches 11 an der Stützwand 43 zwischen der Ringschulter 64 und der abgesetzt ausgebildeten Wandung 44 noch ein kleines Bewegungsspiel verbleibt. Durch dieses Konzept wird es möglich, die auf den Tragflansch 11 zu übertragenden Axialkräfte unmittelbar über den Flanschabschnitt 45 der Führungsbuchseneinrichtung 40 zu übertragen, ohne dass es hierbei zu einer axialen Belastung der Sicherungsringsstruktur 61 kommt.

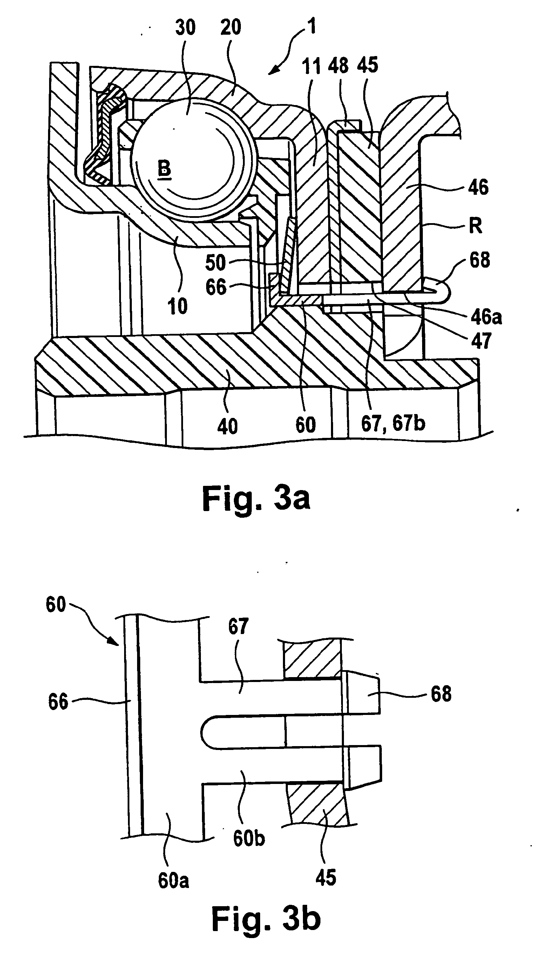

In Figur 3a ist eine Kupplungsausrücklagereinrichtung dargestellt, die nicht Gegenstand der Erfindung ist. Diese Kupplungsausrücklagereinrichtung umfasst ebenfalls eine Wälzlagereinrichtung 1 mit einem ersten Wälzlagerlaufring 10, einem zweiten Wälzlagerlaufring 20 und Wälzkörpern 30, die in einem zwischen dem ersten und dem zweiten Wälzlagerlaufring 10, 20 definierten und zu einer hier nicht näher dargestellten Wälzlagerachse konzentrischen Bahnraum B aufgenommen sind. Die Kupplungsausrücklagereinrichtung umfasst weiterhin eine Führungsbuchseneinrichtung 40, die hier aus einem Kunststoffmaterial gefertigt ist und eine integral mit der Führungsbuchseneinrichtung 40 gefertigte Halteflanscheinrichtung 45 umfasst, die als solche der axialen Verlagerung der Führungsbuchseneinrichtung 40 dient. Die Kupplungsausrücklagereinrichtung umfasst weiterhin eine Tellerfedereinrichtung 50, die der axialen Vorspannung der Wälzlagereinrichtung 1 in die hier gezeigte Sitzposition dient. Die Kupplungsausrücklagereinrichtung umfasst weiterhin eine Sicherungsringstruktur 60, die der axialen Sicherung der Wälzlagereinrichtung 1 auf der Führungsbuchseneinrichtung 40 dient.

Die Sicherungsringstruktur 60 ist derart ausgebildet, dass diese die Wälzlagereinrichtung 1 in einer zur Wälzlagerachse radialen Richtung um ein zur Kompensation eines Fluchtungsversatzes ausreichendes Maß radial verlagerbar abstützt. Die hier gezeigte Kupplungsausrücklagereinrichtung zeichnet sich dadurch aus, dass die Sicherungsringstruktur 60 einen Halteringabschnitt 66 und einen sich daran anschließenden, die Tellerfeder 50 durchsetzenden Umfangsabschnitt umfasst, wobei an diesem Umfangsabschnitt mehrere Rastklauen 67 angebunden sind. Diese Rastklauen 67 sind derart gestaltet, dass diese die Halteflanscheinrichtung 45 und einen daran angesetzten Betätigungsflansch 46 auf einer der Tellerfeder 50 abgewandten Halteflanschrückseite R hintergreifen. Bei dem hier gezeigten Ausführungsbeispiel sind die Rastklauen 67 jeweils mit einem in radialer Richtung nach außen ausgreifenden durch Zurückkröpfen eines Materialabschnitts gebildeten Hakenabschnitt 68 versehen. Die Halteflanscheinrichtung 45 ist bei diesem Ausführungsbeispiel integral mit der Führungsbuchseneinrichtung 40 ausgeführt.

In der Halteflanscheinrichtung 45 sind mehrere in Umfangsrichtung voneinander beabstandete Durchgangsöffnungen 47 ausgebildet, wobei diese Durchgangsöffnungen 47 hinsichtlich ihrer Umfangsposition derart auf die Sicherungsringstruktur 60 abgestimmt sind, dass die Rastklauen 67 durch jene Durchgangsöffnungen 47 hindurchführbar sind und dabei mit Armabschnitten 60b jene Durchgangsöffnungen 47 axial durchgreifen.

Bei der hier gezeigten Ausführungsform der Kupplungsausrücklagereinrichtung ist die Sicherungsringstruktur 60 derart gestaltet, dass diese bei Erreichen des hier gezeigten Montagezustandes den Halteringabschnitt 66 in einer Axialposition sichert in welcher sich eine geforderte Vorspannung der Tellerfeder 50 ergibt. Der Vorspannungszustand der Tellerfeder 50 ist so abgestimmt, dass die Wälzlagereinrichtung 1 mit einer minimalen definierten radialen Verschiebkraft (bevorzugt ca. 50 N), gegenüber der Halteflanscheinrichtung 45 radial verlagerbar ist.

Bei der hier gezeigten Ausführungsform liegt der integral mit dem zweiten Wälzlagerlaufring 20 ausgeführte Halteflansch 11 nicht unmittelbar an der Halteftanscheinrichtung 45 an, sondern ist über ein zwischen diese beiden Bauteile eingefügtes Flanschscheibenelement 48 abgestützt. Dieses Flanschscheibenelement 48 kann insbesondere aus einem hinsichtlich seiner Gleitfunktionseigenschaften besonders abgestimmten Material, z.B. aus einem mit Bronzekugeln befüllten, oder beschichteten Bandmaterial (Permaglidematerial) gefertigt sein. Durch die Dicke dieses Anlageflanschelementes 48 kann Einfluss auf den Vorspannungsgrad der Tellerfeder 50 genommen werden.

Es ist möglich, den hier aufgrund der Eigenelastizität der Rastklauen-Armabschnitte 60b der Rastklauen 67 erreichten Eingriffszustand durch zusätzliche Sicherungsmittel zu sichern. Diese Sicherungsmittel können insbesondere durch Einsteckstrukturen gebildet sein, die als solche den zur Aufhebung des hier gezeigten Eingriffszustandes erforderlichen Verlagerungsweg der Rastklauen 67 sowie der Hakenabschnitte 68 verbauen. Derartige Sicherungseinrichtungen können insbesondere als aus dem Bereich des Betätigungsflansches 46 eingeschobene, beispielsweise als Kunststoffformteil ausgeführte Einsatzzinken ausgeführt sein.

In Figur 3b ist in Form einer Detaildarstellung eine bevorzugte Gestaltung der Sicherungsringstruktur 60 im Bereich der Rastklauen 67 dargestellt. Die Sicherungsringstruktur 60 umfasst, wie bereits angegeben, den als radial nach außen auskragenden Bördelabschnitt ausgeführten Halteringabschnitt 66, den sich daran anschließenden, in Einbaustellung die Tellerfeder 50 und den Aufhängungsflansch 11 der Wälzlagereinrichtung durchsetzenden Umfangsabschnitt 60a sowie die sich daran anschließenden Armabschnitte 60b der Rastklauen 67. An dem, dem Halteringabschnitt 66 axial abgewandten Endabschnitt der Rastklauen 67 sind die in Figur 3a hinsichtlich ihres Querschnittes bereits dargestellten Rasthaken 68 angebraucht. Diese Rasthaken 68 können alternativ zu der hier gezeigten Ausführungsform mit um nahezu 160 Grad zurückgeklappten Hakenabschnitten auch lediglich als um etwa 90 Grad radial nach außen geklappte Flanken ausgeführt sein. Bei der hier gezeigten Ausführungsform durch weitgehend zurückgeklappte Endabschnitte ergibt sich eine Schrägfläche durch welche die Rastklauen 67 beim Einführen in die Durchgangsöffnungen 47 sowie beim Durchgleiten der Innenumfangskante des Flansches 45 selbsttätig radial zur Achse der Wälzlagereinrichtung hin ausgelenkt werden und bei Erreichen der Endstellung aufgrund ihrer Eigenelastizität in den Figur 3a gezeigten Eingriffszustand zurückfedern.

Die Anzahl und die Anordnung der zur axialen Sicherung der Sicherungsringstruktur 60 vorgesehenen Rastklauen 67 wird auf die von der Sicherungsringstruktur 60 zu tragenden Axialkräfte abgestimmt. Vorzugsweise umfasst die Sicherungsringstruktur 60 wenigstens zwei einander bezüglich der Wälzlagerachse diametral gegenüberliegende Rastklauenabschnitte. Zur Steigerung des axialen Kraftübertragungsvermögens können weitere, vorzugsweise bezüglich der Wälzlagerachse X zueinander symmetrisch angeordnete Rastklauen an der Sicherungsringstruktur 60 ausgebildet sein.

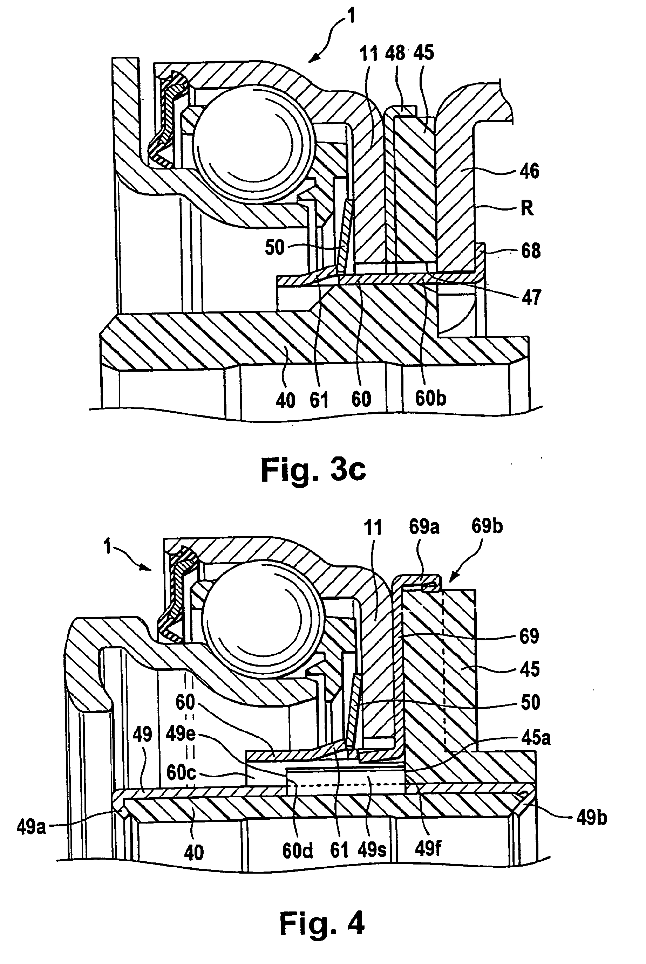

In Figur 3c ist eine weitere Ausführungsform einer erfindungsgemäßen Kupplungsausrücklagereinrichtung dargestellt. Für diese Kupplungsausrücklagereinrichtung gelten die Ausführungen zum Ausführungsbeispiel nach den Figuren 1 bis 3b, insbesondere hinsichtlich der Wälzlagereinrichtung 1 sinngemäß.

Diese Ausführungsform gemäß Figur 3c unterscheidet sich von der Ausführungsform nach den Figuren 3a und 3b insbesondere hinsichtlich der Gestaltung der Sicherungsringstruktur 60.

Die Sicherungsringstruktur 60 umfasst, ähnlich wie bei dem Ausführungsbeispiel nach den Figuren 3a und 3b, mehrere, den Betätigungsflansch 46 und den integral mit der Führungsbuchseneinrichtung 40 ausgeführten Halteflanschabschnitt 45 auf einer der Tellerfedereinrichtung 50 abgewandten Rückseite R hintergreifende Hakenabschnitte 68. Diese Hakenabschnitte sitzen auf der Rückwand des Betätigungsflansches 46 auf. Diese Hakenabschnitte 68 sind, ähnlich wie bei dem Ausführungsbeispiel nach Figur 3a, durch Endabschnitte der integral mit der Sicherungsringstruktur 60 ausgeführten Armabschnitte 60b gefertigt. Diese Armabschnitte 60b sind durch axiale Durchgangsöffnungen hindurchgeführt, die als solche die Halteflanscheinrichtung 45 und den Betätigungsflansch 46 durchsetzen. Zwischen der Halteflanscheinrichtung 45 und dem Tragflanschabschnitt 11 der Wälzlagereinrichtung 1 sitzt auch bei diesem Ausführungsbeispiel ein Zwischenring 48 durch welchen bestimmte Gleitfunktionseffekte zwischen der Tragflanscheinrichtung 11 und dem daran anliegenden Bauteil 48 sichergestellt werden können. Die Tellerfeder 50 ist in axialer Richtung im Bereich ihrer Innenumfangskante, ähnlich wie beim Ausführungsbeispiel nach Figur 1, durch Stützklauen 61 gesichert, die in radialer Richtung nach außen aus der Hüllmantelfläche der Sicherungsringstruktur 60 hervorragen. Diese Stützklauen 61 werden beim Aufschieben der Tellerfeder 50 durch den Innenöffnungsbereich der Tellerfeder 50 zunächst radial nach innen gedrängt und erreichen nach Überschieben der Tellerfeder 50 aufgrund ihrer Eigenelastizität den hier gezeigten Eingriffszustand. Der Abstand zwischen den durch die Stützklauen 61 bereitgestellten, an der Tellerfeder 50 anstehenden Stirnfläche und der an der Rückseite R des Betätigungsflansches 46 anliegenden Innenfläche der Halteklaue 68 ist so abgestimmt, dass sich ein geforderter Verspannungsgrad der Tellerfeder 50 ergibt. Dieser Verspannungsgrad ist so abgestimmt, dass mit einer definierten minimalen radialen Verschiebkraft (bevorzugt 50 N) die radiale Verlagerung der Wälzlagereinrichtung 1 gegenüber der Führungshülseneinrichtung 40 möglicht ist. Das hier dargestellte erfindungsgemäße Konzept kann auch bei Bauformen der Kupplungsausrücklagereinrichtung Anwendung finden bei welchen auf den hier gezeigten Betätigungsflansch 46 und gegebenenfalls auch auf den Zwischenring 48 verzichtet wird.

Der Zusammenbau der hier dargestellten Kupplungsausrücklagereinrichtung erfolgt vorzugsweise indem zunächst die Sicherungsringstruktur 60 aus dem Bereich der Rückseite R des Betätigungsflansches 46 in die durch diesen definierte Innenöffnung eingesetzt wird. Anschließend wird die Führungsbuchseneinrichtung 40 von vorne, d.h. von der Seite der Stützklauen 61 her auf die von dem Betätigungsflansch 46 hervorstehende Sicherungsringstruktur 60 aufgeschoben. Anschließend wird der Zwischenring 48 aufgesetzt. Auf den Zwischenring 48 wird das bereits mit der Tellerfeder 50 bestückte Wälzlager 1 aufgeschoben. Anschließend wird unter Verwendung einer Montagehülse die Tellerfeder 50 derart axial belastet, dass diese mit ihrem Innenumfangskantenbereich die durch die Stützklauen 61 gebildeten Rückenrampenflächen überläuft und in den in Figur 3c dargestellten Eingriffszustand gelangt. An der Sicherungsringstruktur 60 könne auch Sicherungsmittel vorgesehen sein, durch welche die Führungsbuchseneinrichtung 40 in der Sicherungsringstruktur 60 axial fixiert ist.

In Figur 4 ist eine weitere Ausführungsform einer erfindungsgemäßen Kupplungsausrücklagereinrichtung dargestellt. Bei dieser Ausführungsform ist die Führungsbuchseneinrichtung 40 als Kunststoffhülse ausgeführt, die in einen aus einem hochfesten Werkstoff, insbesondere Stahl- oder Buntmetall gefertigten Mantel 49 eingesetzt ist. Der Kunststoffkorpus der Führungsbuchseneinrichtung 40 ist im Bereich der Axialenden durch Bördelabschnitte 49a, 49b des Mantels 49 fixiert und dabei insbesondere in radialer Richtung nach außen aufgespannt. An dem Mantel 49 ist ein radial nach außen auskragender Anschlagstufenabschnitt 49s gebildet, der insbesondere durch Ausstellen entsprechender Wandungsabschnitte des Mantels 49 gefertigt sein kann. An diesem Anschlagstufenabschnitt 49s ist die Halteflanscheinrichtung 45 sowie auch die erfindungsgemäße Sicherungsringstruktur 60 in axialer Richtung festgelegt. Die Sicherungsringstruktur 60 ist bei diesem Ausführungsbeispiel mit einer radial einwärts zur Führungshülseneinrichtung 40 bzw. zum Mantel 49 vordringenden Ausstellung 60c versehen, die mit einer Stirnfläche 60d an einer Stirnfläche 49e des Anschlagstufenabschnitts 49s ansteht. Der Halteflansch 45 weist ebenfalls einen Wandungsabschnitt 45a auf, der an einer der Wandung 49e abgewandten Stirnseite 49f der Schulter 49s ansteht.

Die Sicherungsringstruktur 60 weist einen an dem Betätigungsflansch 45 anstehenden, radial nach außen vordringenden Ringrand 69 auf. An den Außenumfangsbereich dieses Ringrandes 69 schließt sich ein Außenring 69a an, der mit einer Raststruktur 69b versehen ist, durch welche dieser Außenring 69a an dem Betätigungsflansch 45 axial gesichert ist. Durch dieses Konzept wird die Sicherungsringstruktur 60 und der Betätigungsflansch 45 axial auf der Führungsbuchseneinrichtung 40 bzw. auf dem Mantel 49 derselben axial gesichert. Durch entsprechende Gestaltung von Komplementärgeometrien ist es auch möglich, über die an dem Mantel 49, an der Sicherungsringstruktur 60 und insbesondere an dem Halteflansch 45 ausgebildeten Geometrien auch eine Umfangssicherung zu realisieren.

Die Sicherungsringstruktur 60 umfasst weiterhin mehrere in Umfangsrichtung der Sicherungsringstruktur 60 abfolgend angeordnete Stützklauen 61, durch welche wie bei den Ausführungsbeispielen nach den Figuren 1 und 2 sowie nach Figur 3c der Innenumfangsbereich der Tellerfeder 50 in axialer Richtung abgestützt ist.

Bei dem hier gezeigten Ausführungsbeispiel wird der Tragflansch 11 der Wälzlagereinrichtung 1 durch die Tellerfeder 50 unmittelbar gegen die durch den Ringrand 69 gebildete Anlagefläche gedrängt. Aufgrund der in einem engen Toleranzbereich festlegbaren Abmessungen der Sicherungsringstruktur können durch dieses Konzept geforderte Verspannungsgrade der Tellerfeder 50 und damit Anpresskräfte der Wälzlagereinrichtung 1 an den Ringrand 69 zuverlässig eingehalten werden.

Die axiale Verankerung der Sicherungsringstruktur 60 und des Betätigungsflansches 45 an der Führungshülseneinrichtung 40 bzw. an dem Mantel 49 derselben kann auch durch Verankerungsstrukturen erfolgen, die von dem hier gezeigten Ausführungsbeispiel abweichen. Vorzugsweise jedoch erfolgt die Verankerung der Führungsbuchseneinrichtung 40 durch einen Radialüberstand (hier 49a) der in eine gemeinsam von der Betätigungsflanscheinrichtung 45 und der Sicherungsringstruktur 60 gebildete Ausnehmung eintaucht und darin zumindest in axialer Richtung formschlüssig gesichert ist. Die axiale Verankerung der Sicherungsringstruktur 60 an dem Betätigungsflansch 45 kann auch bei diesem Ausführungsbeispiel durch Hakenstrukturen realisiert werden, wie sie vorangehend in Verbindung mit den Ausführungsbeispielen nach den Figuren 3a, 3b und 3c beschrieben wurden. An dem Betätigungsflansch 45 können ebenfalls Strukturen ausgebildet sein, durch welche eine Verankerung der Sicherungsringstruktur 60 in radialer Richtung (vgl. Figur 2) erreicht wird.

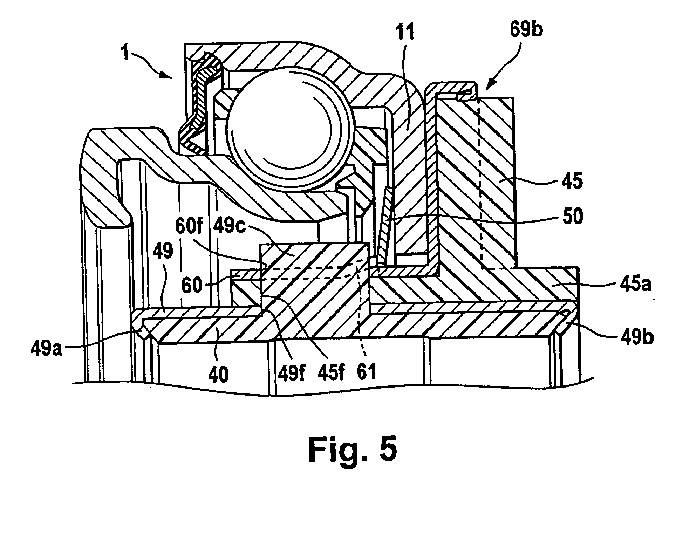

In Figur 5 ist eine vierte Ausführungsform einer erfindungsgemäßen Kupplungsausrücklagereinrichtung dargestellt, die in ihrem Aufbau weitgehend der Kupplungsausrücklagereinrichtung gemäß Figur 4 entspricht. Abweichend von dem Ausführungsbeispiel nach Figur 4 sitzt bei der Kupplungsausrücklagereinrichtung nach Figur 5 der Aufhängungsflansch 11 der Wälzlagereinrichtung 1 in einem Zwischenbereich zwischen dem Betätigungsflansch 45 und einem Radialüberstand 49c der Führungsbuchseneinrichtung 40. Der Radialüberstand 49c ist als blockartiger Abschnitt ausgeführt, der eine in der Sicherungsringstruktur 60 ausgebildete Einsatzöffnung radial durchsetzt und damit die Axialposition der Sicherungsringstruktur 60 festlegt. Der Zusammenbau der hier gezeigten Kupplungsausrücklagereinrichtung erfolgt indem vorzugsweise zunächst die bereits mit der Tellerfeder 50 bestückte Wälzlagereinrichtung 1 auf den durch die Sicherungsringstruktur 60 gebildeten Ringzapfen aufgeschoben wird bis die Tellerfeder 50 mit der Stützklaue 61 in Eingriff tritt. Die so gebildete Baueinheit wird anschließend auf den mit einem Rohrbuchsen-artigen Kemschaftabschnitt 45a versehenen Betätigungsflansch 45 aufgesetzt und zwar in der Art, bis die an der Stützringstruktur 60 ausgebildete Raststruktur 69b (vgl. auch Figur 4) mit dem Betätigungsflansch 45 in Eingriff tritt bzw. eben bis die Sicherungsringstruktur 60 axial an dem Betätigungsflansch 45 gesichert ist. In die so gebildete Baueinheit wird eine den Mantel 49 der Führungsbuchseneinrichtung 40 bildende Metallhülse eingeschoben bis die darin ausgebildete Durchgangsöffnung 49f mit einer in dem Betätigungsflansch 45 bzw. dem Kemschaftabschnitt 45a desselben ausgebildeten Radialöffnung 45f übereinkommt. Anschließend wird ein erstes, zur Bildung der Führungsbuchseneinrichtung 40 vorgesehenes, den Radialüberstand 49c tragendes Führungsbuchsensegment radial von innen in den Mantel 49 eingesetzt bis der Radialüberstand 49c die Öffnungen 49f, 45f sowie die mit diesen Öffnungen 49f, 45f deckungsgleiche Öffnung 60f der Sicherungsringstruktur 60 durchsetzt. Durch Einsetzen weiterer Segmente der Führungsbuchseneinrichtung 40 wird der Innenkorpus der Führungsbuchseneinrichtung 40 komplettiert.

Nach Einsetzen dieser Führungsbuchsensegmente wird der Mantel 49 im Bereich seiner Axialenden 49a und 49b, wie hier dargestellt, gebördelt. Durch dieses Konzept ergibt sich eine hochfeste Koppelung der Führungsbuchseneinrichtung mit der Sicherungsringstruktur 60, dem Betätigungsflansch 45 sowie auch mit der Wälzlagereinrichtung 1. Die Abstützung der Wälzlagereinrichtung 1 über die Tellerfeder 50 wird im wesentlichen nur durch die Bauteiltoleranzen der Sicherungsringstruktur 60 bestimmt. Die übrigen Toleranzketten beim Zusammenbau der hier gezeigten Kupplungsausrücklagereinrichtung haben auf die axiale Anspannung des Tragflansches 11 der Wälzlagereinrichtung 1 im wesentlichen keinen Einfluss.

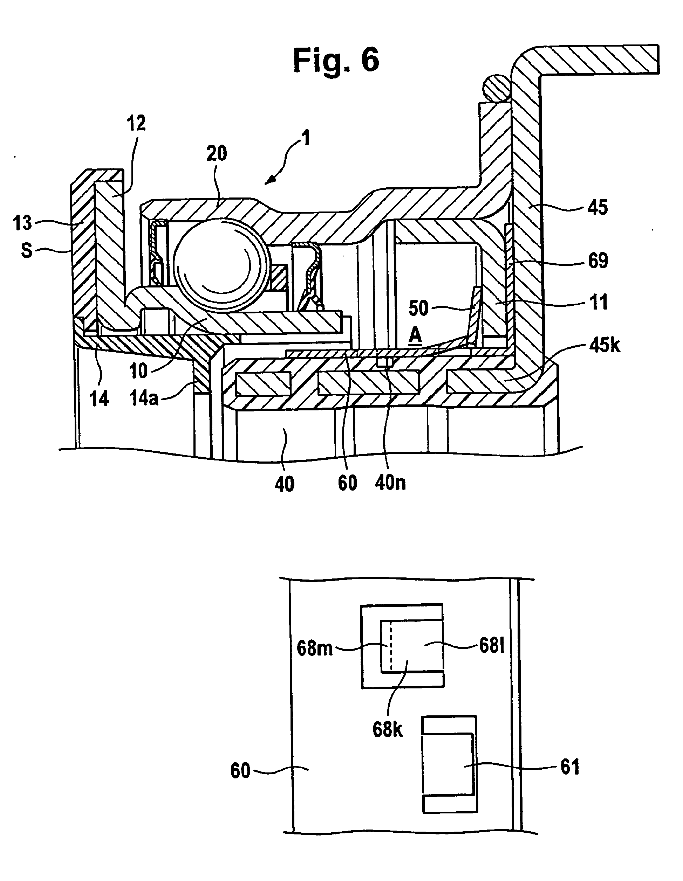

In Figur 6 ist eine fünfte Ausführungsform einer erfindungsgemäßen Kupplungsausrücklagereinrichtung dargestellt. Diese Kupplungsausrücklagereinrichtung umfasst ebenfalls wie die vorangehend beschriebenen Ausführungsbeispiele eine Wälzlagereinrichtung 1 mit einem ersten Wälzlagerlaufring 10 und einem zweiten Wälzlagerlaufring 20. An den ersten Wälzlagerlaufring 10 ist ein Anlaufring 12 angeformt, der als solcher eine zur Bereitstellung einer Kupplungskontaktfläche S vorgesehenen Anlaufringbelag 13 trägt. Der Anlaufringbelag 13 ist aus einem Kunststoffmaterial gefertigt und an dem Anlaufring 12 fixiert. Dieses Fixieren kann insbesondere unmittelbar durch Anspritzen des Belags 13 an den Anlaufring 12 erfolgen. In den Innenbereich des ersten Wälzlagerlaufrings 10 ist ein Buchsenelement 14 eingesetzt, das einen radial nach innen vorstehenden Überstand 14a aufweist, durch welchen ein zwischen dem ersten Wälzlagerlaufring 10 und der Führungsbuchseneinrichtung 40 gebildeter Bewegungsspaltbereich stirnseitig weitgehend abgedeckt ist. Dieses Buchsenelement 14 kann aus einem Kunststoffmaterial, insbesondere auch einem relativ formsteifen Elastomermaterial gefertigt sein und zudem Dichtlippenstrukturen aufweisen, durch welche der zwischen dem ersten Wälzlagerlaufring und der Führungsbuchseneinrichtung 40 gebildete Bewegungsspalt auch unter leichtem Berührungskontakt abgedichtet wird. Die Führungsbuchseneinrichtung 40 ist bei diesem Ausführungsbeispiel durch Anspritzen eines Kunststoffmateriales an einen Buchsenabschnitt 45k gebildet, der bei diesem Ausführungsbeispiel aus einem Metallmaterial, insbesondere Stahlmaterial gefertigt ist und hier integralen Bestandteil des Betätigungsflanschelementes 45 bildet. Auf der derart gestalteten Führungsbuchseneinrichtung 40 sitzt eine erfindungsgemäße Sicherungsringstruktur 60, die eine Stützklaue 61 aufweist, durch welche ein Innenumfangsrand der Tellerfeder 50 axial abgestützt wird. Die Sicherungsringstruktur 60 undfasst eine Abzugssicherungsklaue 68k, durch welche die Sicherungsringstruktur 60 in axialer Richtung auf der Führungsbuchseneinrichtung 40 verankert ist. Diese Abzugssicherungsklauenstruktur 68k umfasst einen radial zur Wälzlagerachse auslenkbaren Armabschnitt 68l und einen daran angeformten Klauenabschnitt 68m. Die gesamte Stützklaue 68k ist durch Stanzbiegeumformung eines Abschnittes des zur Bildung der Stützringeinrichtung 60 vorgesehenen Mantelmaterials gefertigt. Diese Klaue 68m taucht in eine in der Führungsbuchseneinrichtung 40 ausgebildete Umfangsnut 40n ein und sichert dabei die Sicherungsringstruktur 60 in axialer Richtung.

Die Sicherungsringstruktur 60 umfasst auch bei diesem Ausführungsbeispiel einen Anlageflansch 69, der eine Anlagefläche bildet an welcher ein dem ersten Wälzlagerlaufring 10 zugeordneter Tragflanschabschnitt 11 anliegt.

## Patentansprüche

1. Kupplungsausrücklagereinrichtung mit:
- einer Wälzlagereinrichtung (1) die einen ersten Wälzlagerlaufring (10), einen zweiten Wälzlagerlaufring (29), und Wälzkörper (30) die in einem zwischen dem ersten und dem zweiten Wälzlagerlaufring (10, 20) definierten, zu einer Wälzlagerachse (X) konzentrischen Bahnraum (B) aufgenommen sind umfasst,
- einer Führungsbuchseneinrichtung (40) die gemeinsam mit der Wälzlagereinrichtung (1) in Richtung der Wälzlagerachse (X) verschiebbar ist,
- einer Tellerfeder (50) zur axialen Vorspannung der Wälzlagereinrichtung (1) in eine Sitzposition, und
- einer Sicherungsringstruktur (60) zur axialen Sicherung der Wälzlagereinrichtung (1) auf der Führungsbuchseneinrichtung (40) derart, dass die Wälzlagereinrichtung (1) in einer zur Wälzlagerachse (X) radialen Richtung um ein zur Kompensation eines Fluchtungsversatzes ausreichendes Maß radial verlagerbar ist, wobei die Sicherungsringstruktur (60) mehrere in Umfangsrichtung von einander beabstandete und die Tellerfeder abstützende Stützklauen (61) aufweist, wobei die Axialposition dieser Stützklauen (61) derart festgelegt ist, dass durch diese Stützklauen (61) die Tellerfeder (50) in einem gespannten Zustand gesichert ist, und **dadurch gekennzeichnet, dass** die Stützklaue (61) einen Rampenabschnitt (63) aufweist der sich von einem innerhalb des Durchmesserniveaus einer Innenöffnung der Tellerfeder (50) liegenden ersten Durchmessemiveau auf ein über diesem ersten Durchesserniveau liegendes zweites Durchmessemiveau erhebt.

2. Kupplungsausrücklagereinrichtung nach Anspruch 1, **dadurch gekennzeichnet, dass** die Stützklaue (61) als Überschubklaue ausgeführt ist.

3. Kupplungsausrücklagereinrichtung nach Anspruch 2, **dadurch gekennzeichnet, dass** die Stützklaue (61) eine Stirnfläche (62) aufweist die auf einer Seitenfläche (51) der Tellerfeder (50) aufsitzt.

## Claims

1. Clutch release bearing unit having:
- a rolling bearing unit (1) which comprises a first rolling bearing ring (10), a second rolling bearing ring (20) and rolling bodies (30) which are accommodated in a raceway chamber (B) which is defined between the first and the second rolling bearing rings (10, 20) and which is concentric with respect to a rolling bearing axis (X),
- a guide bush unit (40) which can be displaced jointly with the rolling bearing unit (1) in the direction of the rolling bearing axis (X),
- a plate spring (50) for axially preloading the rolling bearing unit (1) into a seat position, and
- a securing ring structure (60) for axially securing the rolling bearing unit (1) on the guide bush unit (40) in such a way that the rolling bearing unit (1) is displaceable radially, in a radial direction with respect to the rolling bearing axis (X), to an extent sufficient for compensation of an alignment offset,
wherein the securing ring structure (60) has a plurality of support claws (61) which are spaced apart from one another in the circumferential direction and which support the plate spring, wherein the axial position of said support claws (61) is set such that the plate spring (50) is secured in a clamped state by means of said support claws (61), **characterized in that** the support claw (61) has a ramp portion (63) which rises from a first diameter level situated within the diameter level of an inner opening of the plate spring (50) to a second diameter level higher than said first diameter level.

2. Clutch release bearing unit according to Claim 1, **characterized in that** the support claw (61) is in the form of a push-over claw.

3. Clutch release bearing unit according to Claim 2, **characterized in that** the support claw (61) has an end face (62) which is seated on a side surface (51) of the plate spring (50).

## Revendications

1. Dispositif de palier de débrayage d'un embrayage, comprenant :
- un dispositif de palier à roulement (1) qui comporte une première bague de roulement de palier à roulement (10), une deuxième bague de roulement de palier à roulement (20) et des corps de roulement (30) qui sont reçus dans un espace formant chemin (B) défini entre les première et deuxième bagues de roulement de palier à roulement (10, 20) et concentrique à un axe du palier à roulement (X),
- un dispositif de douille de guidage (40) qui peut être déplacé en direction de l'axe du palier à roulement (X) conjointement avec le dispositif de palier à roulement (1),
- un ressort Belleville (50) pour la précontrainte axiale du dispositif de palier à roulement (1) dans une position d'appui, et
- une structure annulaire de fixation (60) pour la fixation axiale du dispositif de palier à roulement (1) sur le dispositif de douille de guidage (40), de telle sorte que le dispositif de palier à roulement (1) puisse être décalé radialement dans une direction radiale par rapport à l'axe du palier à roulement (X) d'une quantité suffisante pour la compensation d'un décalage d'alignement,
la structure annulaire de fixation (60) comprenant plusieurs griffes de support (61) espacées les unes des autres dans la direction périphérique et supportant le ressort Belleville, la position axiale de ces griffes de support (61) étant déterminée de telle sorte qu'au moyen de ces griffes de support (61) le ressort Belleville (50) soit fixé dans un état tendu, et **caractérisé en ce que** la griffe de support (61) comprend une section de rampe (63) qui s'élève à partir d'un premier niveau de diamètre se situant à l'intérieur du niveau de diamètre d'une ouverture intérieure du ressort Belleville (50) jusqu'à un deuxième niveau de diamètre supérieur à ce premier niveau de diamètre.

2. Dispositif de palier de débrayage d'un embrayage selon la revendication 1, **caractérisé en ce que** la griffe de support (61) est réalisée sous forme de griffe d'enfilement.

3. Dispositif de palier de débrayage d'un embrayage selon la revendication 2, **caractérisé en ce que** la griffe de support (61) comprend une surface frontale (62) qui repose sur une surface latérale (51) du ressort Belleville (50).
